(19) Europäisches Patentamt
European Patent Office
Office européen des brevets

(11) **EP 3 331 385 B1**

(12) **EUROPEAN PATENT SPECIFICATION**

(45) Date of publication and mention
of the grant of the patent:
**02.04.2025 Bulletin 2025/14**

(21) Application number: **16750592.4**

(22) Date of filing: **03.08.2016**

(51) International Patent Classification (IPC):
*A23P 20/10* (2016.01)    *A23L 19/00* (2016.01)
*A23L 19/18* (2016.01)    *A23L 35/00* (2016.01)
*A23L 33/115* (2016.01)

(52) Cooperative Patent Classification (CPC):
**A23L 19/03; A23L 19/18; A23L 29/10; A23P 20/11**

(86) International application number:
**PCT/US2016/045415**

(87) International publication number:
**WO 2017/024069 (09.02.2017 Gazette 2017/06)**

(54) **PROCESS FOR THE CONTROLLED INTRODUCTION OF OIL INTO FOOD PRODUCTS**

VERFAHREN ZUR KONTROLLIERTEN EINFÜHRUNG VON ÖL IN NAHRUNGSMITTEL

PROCÉDÉ POUR L'INTRODUCTION CONTRÔLÉE D'HUILE DANS DES PRODUITS ALIMENTAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2015 US 201514816784**

(43) Date of publication of application:
**13.06.2018 Bulletin 2018/24**

(73) Proprietor: **JimmyAsh LLC**
**Backersfield, CA 93313 (US)**

(72) Inventors:
• **ASHOURIAN, Jamshid**
**Santa Monica, California 90402 (US)**

• **PHELPS, Steven**
**Tigard, Oregon 97224 (US)**

(74) Representative: **Lucas, Brian Ronald**
**Lucas & Co.**
**135 Westhall Road**
**Warlingham, Surrey CR6 9HJ (GB)**

(56) References cited:
GB-A- 2 254 994    US-A- 3 959 498
US-A- 4 511 583    US-A- 5 059 435
US-A- 5 141 759    US-A- 6 010 726
US-B2- 8 815 257

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates generally to methods of making low-fat, fat free, or full-fat food products in which food pieces are subjected to a controlled application step of oil and can be subjected to enzyme and/or cation treatment, blanching and/or specific cooking and/or drying techniques, to provide for snack food products having the texture, flavor, and other characteristics of conventional full-fat fried products.

Snack food products typically are made by frying sliced vegetable pieces in hot oil so that the moisture content of the sliced food pieces is reduced to a very low level and fat content is raised exponentially. Such products generally have a characteristic crispness that adds significantly to its organoleptic desirability. Fried potato or apple chips prepared using conventional methods generally have a fat content from about 30 percent to about 40 percent by weight, a percentage of fat that is considered by some to be unhealthy if these types of products are broadly substituted for low-fat foods and consumption is significant over time. While such products are accepted in the marketplace, consumers' desire to lower their fat consumption, limits this acceptance.

Furthermore, the conventional methods generally used, require these foods to be fried at high temperatures that can result in the production of potentially deleterious by-products. Reports of such by-products in recent years have led to general concerns about both fried and baked foods, especially those containing high amounts of fats and carbohydrates. Reports of acrylamide formation, generally in proportion to the degree of browning of foods high in fats and carbohydrates, have raised significant concerns within the food industry, the potential for harmful effects of this particular processing by-product.

To address some of these concerns, efforts have been made to reduce the amount of fat in such snack food products, and more recently, to find ways to minimize formation of potentially deleterious substances such as acrylamide.

In recent years, "light" chips have been made using synthetic oils/fat that is substantially non-digestible and consequently non-absorbable by the human body, e.g. OLESTRA™. These products have received limited acceptance due in part to off-flavors perceived by some reports of detrimental gastrointestinal side effects and an FDA requirement of a warning label on such products, providing information that such fat substitutes may cause gastrointestinal side effects such as loose stools and abdominal cramping and/or the inhibition of absorption of some nutrients.

While products such as potato and apple chips are typically made using conventional frying methods, snack food products made with other nutritionally beneficial vegetables and fruits such as carrots, squash, parsnips, yuccas and pears have not successfully entered the market substantially due to the lack of effective processing methods.

There have been numerous efforts in the past to reduce the amount of fat in snack foods such as potato chips, via various processing means. These methods have achieved limited success in reducing fat content while still achieving desirable taste. One example is by conditioning surfaces of the food pieces prior to frying in oil in order to reduce oil absorption during frying.

Another example of reducing fat content is preparing the food pieces with full-fat or near full-fat content through conventional frying methods, and to subsequently remove some of the oil, such as via centrifugal force or superheated steam. These methods tended to be complicated and expensive, are known to damage or otherwise undesirably alter the final product, and would typically remove only a small fraction of the oil, and less than the amount of oil removal desired.

Yet another method of reducing oil content involved alternative methods of drying the food pieces without frying in oil, such as microwave heating, convection ovens or fluidized bed dryers. Oil or fat was typically applied in a separate step, such as a spraying step, in order to achieve a desired flavor while providing for some control over the amount of fat applied to the food pieces. However, ideally the food pieces should be in a monolayer to ensure even application of the oil, which can be difficult and expensive. Alternatively, the oil can be applied in a spray drum, which can evenly distribute the oil, but generally must be applied after drying, which can result in less desirable taste and texture than when the oil is applied before drying.

Because of the difficulties in spraying the oil, oil can also be applied by immersing the food pieces in the oil without cooking the food pieces. It is considerably more difficult to control the oil uptake onto or into the food pieces through oil immersion. For example, the parameters that tend to affect oil uptake the most are immersion time and temperature. Low-temperature oil has a higher viscosity, and thus tends to more easily adhere to the food pieces, while higher-temperature oil is less viscous, and less likely to adhere, but will also tend to be more likely to penetrate the surface of the food pieces, resulting in higher oil uptake. A food piece that has been fully immersed in oil of any temperature for any length of time will emerge with a minimum carry-over of oil that adheres to the surface of the food piece. For example, for potato slices the carry-over can be 5-12% of the weight of the slice, depending on slice thickness. After subsequent drying the percentage of oil by weight can be comparable to, or only modestly below, the oil take-up via traditional frying methods. Excess take-up of oil via the immersion method can be partially controlled by a subsequent oil removal step, such as gravitational draining, water sprays, or pressurized air jets. These methods, however, can also be difficult because of the need to monolayer the food pieces to ensure even removal of oil. The oil removal also adds another step to the process.

Roan (U.S. Patent No. 4,058,631) discloses a method of making fried food in which raw food product is treated with an aqueous solution of an enzyme, such as alpha amylase, for a period of time sufficient for the enzyme to penetrate and coat the surface of the food, and thereafter the food product is deep fried. Roan indicates that when the surface of a raw, starchy food product is coated with an aqueous solution of alpha amylase prior to frying, less fat is absorbed in the food during frying than occurs without the enzyme treatment, and the flavor of the fried food is improved.

Dreher et al. (U.S. Patent No. 4,756,916) discloses a process for producing low oil potato chips comprising washing potato slices with an aqueous solution, and applying oil to the washed slices to coat the slices with oil. The oil-coated slices are arranged as a monolayer on an endless conveyor belt, blanched at a temperature between about 71 and 100°C (160°F and 212°F), and then baked at a high temperature of at least about 199°C (390°F) but below the smoke point of the oil, to partially dry the slices by reducing the aqueous moisture content of the slices to about 10-20% by weight. The partially dried slices then are further baked at a lower temperature of about 143 - 160°C (290°-320°F) to finish drying the slices by reducing the aqueous moisture content of the slices to about 2% by weight or less, to produce a product having an oil content of between about 10-25% by weight.

Laufer (U.S. Patent No. 5,292,540) discloses a process for preparing potato chips comprising the steps of washing potatoes to remove foreign matter from the skin thereof, cutting the potato into thin slices, baking the slices for a period of about six to twelve minutes within a temperature range of about 121 - 260°C (250 to 500°F), and heating the slices in a microwave oven for about two to seven minutes.

Yamashita (U.S. Patent No. 5,312,631) discloses a method for preventing cut pieces of agricultural products from sticking to each other during the steps of drying and cooking, which includes washing the cut pieces with, or immersing the same in, a solution of an amylolytic enzyme, or an acidic or alkaline aqueous solution. The cut pieces are blanched prior to enzyme treatment.

Zussman (U.S. Patent No. 5,370,898) discloses a cooking process for food chip products that does not involve oil-based cooking. Food slices are washed with water to remove extractable surface starch, multi-layered, transported to an oven, and baked in a fluidized bed of hot air or steam. The baking process is a multi-step process, whereby the food slices are exposed to a higher pressure in a first zone for several minutes to ensure that the individual food pieces are separated. The pressure is then lowered in a second zone for a second period of time. Similarly, in a third zone the pressure is reduced for a predetermined period of time to finish cooking the food products. Thereafter the chips are air-dried or finished in a dryer.

Lewis et al. (U.S. Patent No. 5,441,758) discloses the preparation of low-fat or fat free potato chips or straws by a process comprising slicing potatoes to form slices or straws, blanching the sliced potato, and treating the slices during or after blanching with a high temperature amylase enzyme to prevent later sticking together of slices during processing. The slices are thereafter dehydrated at 70 - 100°C (158°F - 212°F) content of 9% or lower. The dehydrated potato pieces are then rehydrated to a moisture content of 12% to 30%, and thereafter toasted to about 2% moisture at a temperature of 140°C to 220°C. The use of a high temperature amylase is required so that the enzyme remains effective during processing, and is not inactivated by the blanching step. Lewis et al. discloses that a small amount of oil may be added at any point in the process, "but preferably just after toasting."

Petelle et al. (U.S. Patent No. 5,470,600) discloses a method of making fat-free potato chips, by initially cooking potato slices in a three zone primary oven, by first radiant heating the slices and then subjecting the slices to two successive stages of forced air heating to reduce the moisture content of the slices to near a final moisture content. Petelle et al. further discloses independently controlling the time duration in each of the three zones, simultaneously forcing the air into the top and bottom surfaces of the slices in the primary oven to a near final moisture content of about 15% by weight, independently controlling the time duration of the slices in the dielectric heater to a final moisture content of about 7% by weight using wavelengths of about 65.8 feet at a frequency of about 15 mhz, and allowing the slices to successively, increasingly pile up in the last two forced air stages and the dielectric heating stage.

Benson et al. (U.S. Patent No. 5,603,973) discloses a process for making potato chips without the use of oil, wherein whole potatoes are cut into discrete slice pieces which are washed to remove starch or debris from the slice surfaces. The slices are arranged in a single layer and the surface water is removed from the slice surfaces by exposing them to blasts of air and suction. Alternatively, the slices may be washed in warm water at a temperature of about 54°C (130°F) to preheat them. The slices are transferred to a heated conveyor to enter an infrared zone for exposure to high intensity infrared energy for a short period of time, less than 25 seconds, effecting a blanching of the slices and quenching of naturally-occurring deleterious enzyme action. In a subsequent step, dry air is impinged upon the slices from above and below to reduce the water content below 35% by weight. The slices are accumulated in a multi-layer pack and dried in moving air until moisture content has been obtained to a level on the order of 0.5% to 2%.

Wiedersatz (U.S. Patent No. 5,858,431) discloses a method for preparing fat-free snack chips, comprising preparing slices of raw food product, which are subjected to a high intensity air knife arrangement to remove surface moisture, then exposed to a hot air fluid bed impingement including multiple dual-zone hot air fluid bed impingement ovens operating under different predetermined conditions. In the preferred embodiment, the slices are exposed to two dual-zone hot air fluid bed impingement ovens, the first oven having a conveyor belt transporting slices through the oven at a speed of 0.76 - 0.91 metres (2.5 to 3.0 feet) per minute and operating at 260 - 274°C (500 to 525°F) (zone 1) and 232 - 260°C (450 to 500°F) (zone 2), and the second oven having a conveyor belt operating at a speed of 0.46 - 0.6 metres (1.5 to 2.0 feet) per second and at 177 - 204°C (350 to 400°F) (zone 1) and 149 - 204°C (300 to 350°F) (zone 2). The first impingement oven of the preferred embodiment removes approximately 50 to 60 per cent of the moisture in each slice, while the second impingement oven of the preferred embodiment removes approximately 20 to 30 per cent of the remaining moisture. The slices may then have oil and/or seasoning applied thereto, and are passed to a combination microwave and hot air dryer which removes entrained moisture without scorching the chips.

Xu et al. (U.S. Patent Publication No. 2002/0004085) discloses methods for producing a consumable product from potatoes, comprising: (a) treating a potato substance with an effective amount of one or more exogenous enzymes selected from the group consisting of an amyloglucosidase, glucose oxidase, laccase, lipase, maltogenic amylase, pectinase, pentosanase, protease, and transglutaminase, and (b) processing the enzyme-treated potato substance to produce a potato product. In one embodiment, blanching of the potato substance may occur prior to enzyme treatment. The processing step may include partial dehydration to reduce the initial moisture content by about 5-30% prior to frying in oil or baking.

Olson et al. (US Patent No. 4,511583) discloses methods for preparing battered and breaded comestibles, e.g., fish, and fried food products prepared therefrom which exhibit reductions in cooking fat absorbed during frying. The comestibles are prepared by applying an aqueous solution comprising about 25% to 35% of a film forming agent, e.g., gelatin or certain starches in amounts sufficient to provide weight ratio (dry basis) of agent to coating of about 0.15:1 to 0.55:1. Optionally, the coating can be subsequently dried, e.g., forced hot air convection at 250°F. to 700°F., (121°C. to 371°C.). Coated comestibles can contain a batter ranging from about 0.10:1 to 0.85:1 and breading to comestible weight ratio of 0.05:1 to 0.20:1. The coated comestibles can then be par-fried in hot oil for about 15 to 40 seconds. Oil absorption reductions upon frying range up to about 25% to 50%.

Despite the many advances in the processing of snacks and chips, there nevertheless remains a need for improvements to these products, and the processes for making them, characterized by improved crispness, mouth feel and flavor properties, reduction of fat content and overall improvement in nutritional profile, including minimization of exposure to conditions that can result in the formation of potentially deleterious by-products. These all require processes that are feasible, efficient, manageable, and are practically and economically scalable for production at output levels necessary for product commercialization in an adequately fuel efficient production environment.

## SUMMARY OF THE INVENTION

The present invention provides a process for the application of oil to food pieces, comprising:

(a) providing a plurality of cut or shaped food pieces;
(b) applying an oil-water emulsion to the food pieces to provide an amount of oil to the food pieces, the oil content and the application time of the oil-water emulsion being selected to provide a predetermined final wt% oil to the food pieces, and so that the food pieces have an initial moisture level after applying the oil-water emulsion; and
(c) reducing the initial moisture level to a moisture level of from 0.2 to 80% by weight to provide a food product, wherein the food pieces are not cooked/fried in hot oil.

A homogenous mixture of oil and water for convenience will be referred to herein as a water and oil "emulsion," although it is not necessary to employ exogenous emulsifiers or surfactants to provide the beneficial effects of the emulsion. The process can provide for the precise control of the application of oil to food pieces prior to the removal of moisture from the food pieces, for example by drying or cooking the food pieces, such as via hot air, thermal or microwave ovens, and/or dryer(s), without frying the food pieces in hot oil.

Although oil-spraying methods can be used in the present method, e.g., to apply oil to the dried or cooked food product, the present process for oil application can avoid the disadvantages associated with oil spraying methods in that the present method can apply a uniform coating of oil on the surface of the food pieces. The process can further offer an advantage over the addition of oil by immersion of the food pieces in 100% oil in that the process can permit a wide and precisely controllable range of oil content to be achieved in the finished food product, anywhere from trace or low amounts of oil (about 0.2-10 wt-%)to amounts approaching those of food pieces fried in oil, while avoiding application of oil in the cooking/drying step(s).

The present disclosure also describes food products, such as snack food products, having the texture, flavor, and other characteristics of conventional full-fat products, but with reduced and/or controlled amounts of oil as compared to products cooked in hot oil. Acrylamides can also be low in the present food products, e.g., potato chips and other snack food products can be prepared that have less than 150 ppb acrylamide.

The initial moisture level may be reduced to a moisture level of from about 0.2 to about 80% by weight, including 10-80% wt-%, such as 35-70 wt-%, e.g., 40-65 wt-%. In accordance with additional embodiments, the final moisture level can be from about 0.5 to about 5.0% by weight. Oil can be present from trace amounts, to up to about 1-3 wt-%, up to about 10 wt-%, up to about 15 wt-%, or up to as high as about 30-35 wt-% oil, but in the absence of "deep fat" frying/cooking the food pieces in oil.

In accordance with a further embodiment of the invention, a method is provided for making a food product, comprising,

(a) providing a plurality of cut or shaped food pieces;
(b) optionally exposing the food pieces to a solution comprising one or more enzymes and/or one or more cations to coat the surface thereof;
(c) thereafter, optionally blanching the plurality of food pieces for a time sufficient to inactivate any enzymes on the surface of the food pieces, wherein the food pieces have an initial moisture level after the blanching step;
(d) contacting the food pieces with an oil/water emulsion to impart an initial preselected oil content to said food pieces; and
(e) reducing the initial moisture level to a moisture level of from about 0.2 to about 20% by weight. In accordance with additional embodiments, the moisture level is preferably from about 0.5 to about 10% by weight.

A moisture level of about 10 to about 80% by weight, preferably about 20 to about 50% by weight, more preferably about 25 to about 35% by weight, may be achieved with a number of the embodiments of the present invention, after the first moisture level reduction step. Thereafter, the food pieces are optionally exposed to a second moisture level reduction procedure which reduces the intermediate moisture level to the final moisture level. The intermediate and the final drying steps may further be broken down to sub steps, or alternatively combined into one step.

As used herein, the term "providing" the cut or shaped food pieces includes the processor's or user's receiving pre-cut or shaped food pieces or obtaining whole fruits and/or vegetables and then cutting, slicing or otherwise forming them into the shape of the final food product, such as a chip, strip, fry, etc.

Additional features of the invention can be understood in reference to the accompanying descriptive matter in which there is illustrated and described preferred embodiments of the present invention.

DESCRIPTION OF EMBODIMENTS

The processes described herein can provide for the preparation of food products, such as snack food products, comprising a predetermined fat content. The process can provide for precise control of the fat content of the food pieces. The process can include coating the food pieces with a homogenous or substantially homogenous mixture of water and oil, followed by drying the food pieces to yield a food product having the desired oil and moisture content. More particularly, the process can comprise applying an oil-water emulsion mixture to food pieces, such as fruit or vegetable chips or sticks, which have traditionally been fried in oil, but which can now be cooked or dried through other means in the absence of frying, flash frying, deep fat frying or par-frying, in order to produce a final food product possessing similar organoleptic properties to a corresponding food product fried in oil, but preferably having a reduced fat content.

In examples, the oil used in the oil-water emulsion can be a natural or synthetic edible oil. The term "edible" can refer to fats and oils that can be ingested by humans and animals without significant toxicity, whether or not they are nutritious. This term includes both natural and synthetic oils. The term "fat" includes lipids that are solid at room temperature (20-25°C) but are liquid at the temperatures conventionally used to cook food pieces by frying.

A process is described herein, the process comprising:

(a) providing a plurality of cut or shaped food pieces;
(b) applying an oil-water emulsion to the food pieces for a time sufficient to provide a predetermined amount of oil to the food pieces and so that the food pieces have an initial moisture level after applying the oil-water emulsion; and
(c) reducing the initial moisture level to a final moisture level of from 0.2 wt-% to 80 wt-% to provide a food product, in the absence of frying in oil.

A food product is also described herein, the food product comprising a plurality of cut or shaped food pieces and a coating on the plurality of food pieces, the coating comprising an oil-water emulsion wherein the oil content of the oil-water emulsion that contacts the food pieces is from 5 wt-% and 85wt-% of the coating. In some examples, the food pieces and the coating are dried to a moisture content of from 0.2 wt-% to 20 wt-%.

Preferably the food pieces are treated with water comprising cations and/or effective amounts of one or more surface starch - removing or - degrading enzymes prior to blanching and application of the oil - water emulsion. The cations can also or alternatively be included in the blanching medium, e.g., the blanch water.

In preferred embodiments, the present invention provides a food or snack food product processed in such a manner so as to provide a plurality of cut or shaped food pieces that have a taste, texture and/or appearance of conventionally produced products made by a process including a step in which the food pieces are fried in oil (typically at temperatures of greater than 300°F-400°F, 149-204°C) so to yield a finished food product that contains, e.g., 25-40 wt-% oil. Preferably, a snack food product prepared in accordance with the present invention, in the absence of frying in oil, has at least one, preferably at least three, preferably at least five, of the following attributes: a crisp texture, a fat content of less than 35 wt-% fat, such as 15 wt-% fat or less, for example 10 wt-% fat or less, such as 1 wt-% fat or less, for example 0.5 wt-% fat or less; a moisture content of greater than 0.1 wt-% water, such as from 0.5 wt-% to 80 wt-%, water, or from 0.5 wt-% to 10 wt-% water; the food products in the form of a chip, a stick, or a slice; the food pieces fracturing at less than or equal to 12 N; and the food pieces having an average Young's modulus of equal to or greater than 3.5 N/mm. The food products can contain 0.5 wt-% fat or less, up to 45 wt-% fat, or can comprise up to 5-20 wt-% fat, or as much as 30-35 wt-% fat, e.g., 1-15 wt-% fat .Certain of the food pieces, such as chip-type snack food products will fracture at less than or equal to 12 N and have an average Young's modulus of equal to or greater than 3.5 N/mm.

In yet another preferred embodiment the present invention provides a food product and the method of its production and/or cooking processed in such a manner so as to provide a plurality of cut or shaped food pieces that (i) have a new and/or unique taste, texture and/or appearance, or (ii) have less fat and/or are considered as healthier versions of currently available products, or (iii) have been made from vegetables, fruits, grains, nuts, legumes or any other consumable ingredients and their combination thereof where the production of such products were not previously feasible due to lack proper production and/or cooking methods.

Surprisingly, the present invention has been found to retain the desired high quality, flavor, texture, appearance and consumer acceptability of high-fat snacks, through certain desirable treatment of the raw materials and subsequent cooking under conditions that eliminate, optionally minimize, and/or control the amount of contact with fats, such as oils or oil substitutes, and limit the potential for producing potentially deleterious by-products such as acrylamides or carcinogenic aldehydes.

Further, in contrast with known conventional frying methods, the food pieces can be infused with a predetermined amount of fat in a totally controlled environment during the production process. In addition to being able to control the desired amount of fat being applied to the products of present invention to an exact amount, the present invention entirely eliminates the need for utilizing pools of hot oils or oil substitutes, and maintaining, filtering out, and, at last, in most cases, disposing of the related fats used in the production process.

In addition, the present invention also eliminates the need for using defatters or other oil-removal means, such as described in the patents cited hereinabove in the production of relevant low-fat snack food products.

Food Pieces

The term "food pieces" is intended to include subunits or pieces derived from substantially any foods. Preferably, the food pieces may be provided as cut or shaped food pieces that can be shaped or reshaped directly from their raw state. These foods include meat, poultry, fish, shellfish, vegetables and/or fruits , including potato, beet, pumpkin, squash, tomato, mushroom, zucchini, carrot, eggplant, apple, pear, bananas, berries, grains, beans, nuts, seeds, rutabaga, plantain, taro, okra, onion, parsnip, yam, sweet potato, yucca, papaya, mango and pineapple.. These food pieces include pureed, sliced, diced, milled, grinded, powdered, or pulverized fruits, vegetables, legumes, grains, nuts, beans and seeds, including products such as beans, rice, corn and wheat.

Singly or in combinations, the aforementioned products and ingredients, preferably beans, rice, corn, corn masa and wheat can be manipulated to form sheets, slices or pieces of food composition through extrusion or sheeting of a prepared dough or mixture. The dough or mixture thus formed then can be extruded or cut into any desired shapes. There are many variations on this basic procedure for manipulating flour or dough into a shape suitable for the present process. For example, see U.S. Pat. Nos. 3,600,193 (mixing corn flour with seasonings); 3,922,370 (mixing water, rice and rice flour); and 3,348,950 (mixing corn, sucrose, water, and corn grits).. Generally, the process of the invention can be used with all foods that were heretofore fried or with foods that cannot tolerate the frying process. The format of the food can include, for example, sticks, strips, slices, chips, crinkle cut, waffles, popcorn texture and flakes. Flaked products may be made into bars or cereals themselves or used as ingredients for granola, granola bars, or add-ins to yogurt, cereals, trail mixes and snack mixes.

For example, corn tortilla products, such as tortilla chips or bean chips can be prepared initially by forming a composition from water and corn, corn masa, or bean flour, or alternatively cooked corn or beans, and cooked in conventional ovens such as tortilla ovens. Tortilla or bean strips or rounds can then be treated and processed using the current invention to produce fat free or low fat snack products that have a crispy texture and flavor of fried foods without frying in oil or oil substitutes. Generally, the process of the present invention can be used with all snack foods that have traditionally been fried in oil to achieve a crisp texture and traditional fried flavor.

In another embodiment, the sheeted or extruded dough or mixture described herein can be made from a potato mixture or other starch material, alone or in combination with other ingredients, and then processed in accordance with the teachings of the present invention to a crispy finished product without frying.

Preferred food pieces are derived from fruits and/or vegetables that have a generally solid inner matrix that is exposed when sliced and demonstrates fracturability when a slice is bent. In a preferred embodiment, the food pieces are derived from potatoes such as those generally used to produce potato chips. In preferred embodiments, the food pieces comprise a potato substrate. The potato substrate may simply be farm-grown potatoes (e.g. raw potatoes) of any variety. Such varieties include, but are not limited to, Bintje, Russet Burbank, Yukon Gold, Kennebec, Norchip, Atlantic, Shepody, Sebago, Red Pontiac, Red Warba, Irish Cobbler "BC", Norgold Russet "BC", Norland, Atlantic, White Rose, Superior, Centennial Russet, Keswick "NB 1", Green Mountain, La Soda, Red La Rouge, Red Nordland, Red Bliss, Yellow Finnish, Ruby Crescent, and Australian Crescent, Russian Blue, Peruvian Blue, Superior, Katahdin, and sweet potato varieties such as Beauregard, Jewel, Nemagold, Centennial, Excel, Regal, Southern Delite (Hernandez, Vardaman , Travis, White Delight, Sumor, Nancy Hall, Picadita, Campeon, Star Leaf /Boniato, Japanese, Chinese, and Okinawan Purple.

Further processing to the food pieces can be performed as well. For example, for vegetable food pieces, such as potatoes to make potato chips or French fries, the process can include exposing the food pieces to a solution comprising one or more enzymes, one or more cations, or both. The food pieces can also be blanched, such as by immersing the food pieces in water having a temperature of from 60 °C to 100 °C, which can deactivate the enzymes. This additional processing can be performed before applying the oil-water emulsion to the food pieces.

In alternative embodiments, other nutrients including vitamins and minerals, such as Vitamin A, Vitamin, B6, Vitamin B12, Vitamin C, Vitamin D, Thiamin, Riboflavin, Niacin, Folic Acid, Phosphorous, Magnesium, Copper, Calcium, Zinc and Iron can be added to the products of present invention either by infusing such vitamins and minerals into the food pieces in the enzyme treatment, cation treatment, oil application and/or blanching process, or in an additional step or by spraying a compound including any desired vitamins and/or minerals over the food pieces prior to or after cooking. This procedure results in a product that is nutritionally fortified and can make snack food products that are healthier.

In alternate embodiments, flavor enhancers and seasoning blends such as salt (NaCl), sugar, herb extracts, fruit extracts and vegetable extracts or a combination thereof can be infused into the snack food product by steeping or soaking the cut food pieces with the respective salt, sugar, herbs, fruits and vegetables, thereby incorporating these flavoring components into the food pieces either in the blanch water and/or by having a separate step following or prior to the blanching step in which flavors are fused into the cut food pieces. Alternately, cut food pieces may be soaked in concentrated flavor extracts that are either aqueous or otherwise. In yet another embodiment, the snack food products of the present invention may be coated with chocolate, caramel, syrups, and coatings made from fruits or vegetables or any other similar covering, thereby creating other novel gourmet snacks that are free of, or alternatively low or high in fat.

Food Piece Preparation.

The food pieces are cut, formed or shaped from one or a combination of food materials. For raw vegetables or raw plant materials, the food pieces are preferably cleaned, optionally peeled, and cut. Preferred vegetables such as potatoes, vegetables, fruit, or other food products are preferably cut into slices, sticks or strips of a desirable size and shape for chips, sticks, shoestrings, wavy cut chips, crinkle cut chips, waffle cut chips, straight cut chips and sticks. After cutting, forming or shaping, the prepared food pieces are preferably contacted with an aqueous medium, such as a water rinse, to remove free starch. Removing the free starch is best for optimizing use and reducing the amount of enzyme, plus free starch can leave a powdery appearance after drying the chip.

Enzyme and/or Cation Treatment:

The prepared food pieces may be exposed to an enzyme solution or a cation solution, more preferably an enzyme and cation solution. When enzyme treatment is performed, the enzymes are preferably used in amounts that contribute to one or more of the improved properties as defined herein and/or provide at least one of the following advantages: increasing the crispness, reducing the stickiness and improving color of finished products. Without being bound by theory, it is believed that the optional cations increase the activity of the enzymes, reducing time in the solution, and also make the cut food pieces more firm or rigid so they are easier to process. Further, cations may also decrease enzymatic browning as well as contribute to the snack food product's nutritional profile.

The appropriate exposure to a given enzyme or cation for improving a specific property or properties of a snack food product will depend on the enzyme or cation in question. The skilled person may determine a suitable enzyme or cation exposure on the basis of methods known in the art. Where both enzyme and cation treatments are performed, the treatments are preferably carried out simultaneously using a single solution, although the treatments may also be performed separately using an enzyme solution followed by a cation solution, or a cation solution followed by an enzyme solution. Salts and/or flavoring ingredients can also be added to any of the solutions.

The enzymes to be used in the methods of the present invention may be in any form suitable for the use in question, e.g., in the form of a dry powder, agglomerated powder, or granulate, in particular a non-dusting granulate, a liquid, in particular a stabilized liquid, or a protected enzyme. Granulates and agglomerated powders may be prepared by conventional methods, e.g., by spraying the enzyme(s) onto a carrier in a fluid-bed granulator. The carrier may consist of particulate cores having a suitable particle size. The carrier may be soluble or insoluble, e.g., a salt (such as NaCl or sodium sulfate), a sugar (such as sucrose or lactose), or a sugar alcohol (such as sorbitol). The enzymes may be contained in slow-release formulations. Methods for preparing slow-release formulations are well known in the art. Liquid enzyme preparations may, for instance, be stabilized by adding nutritionally acceptable stabilizers such as a sugar, a sugar alcohol or another polyol, and/or lactic acid or another organic acid according to established methods.

Suitable enzymes, forms taken by the enzymes, commercial availability, etc. for use in accordance with the present invention are chosen from one or more of the enzymes listed in U.S. Patent No. 4,058,631; U.S. Patent No. 5,312,631; and U.S. Patent No. 7,056,544.. Preferably, the enzyme is other than a high-temperature enzyme, such as the high temperature amylase described in U.S. Patent No. 5,441,758. However, under certain circumstances, such an enzyme may be used in accordance with the invention, and the use of a high temperature enzyme is not disclaimed herein. Preferred enzymes in accordance with the present invention include amylase (alpha and/or beta), cellulase, invertase, pectinase and amyloglucosidase, with amylase being the most preferred. Preferred enzymes are those than can degrade starches, e.g., starch degrading enzymes such as amylase and other enzyme that are starch degrading, so as to degrade starch present, for example, on the surfaces of the food pieces, e.g., by cleaving various saccharides from the starches. Such degradation may occur to starches present in the interior of the food pieces. Preferably, the one or more enzymes is present in the solution at a concentration of 0.1 to 5% by weight.

In accordance with the invention, the enzyme solution may further comprise one or more cations, or the cations can be provided in a solution without enzymes. The term "cation-producing compound" is intended to include compounds in which cations are produced in solution via dissociation of the cation with an anion, either at ambient temperatures or with the addition of heat. Suitable cation-producing compounds in accordance with the present invention include, but are not limited to, alkali metal salts, such as lithium, sodium and/or potassium salts; alkaline earth metal salts, such as magnesium and/or calcium salts; aluminum compounds; and group VA metal compounds, such as nitrogen, phosphorous and/or bismuth compounds (e.g., ammonium). More preferred from this set of compounds are calcium salts, magnesium salts, potassium salts, aluminum compounds and nitrogen compounds, with calcium salts being the most preferred. Preferably, the one or more cations is present in the solution at a concentration of from 0.1 to 5% by weight, more preferably from 0.2 to 2.5% by weight.

The exposure of the food pieces to the enzyme solution, optionally including cations as described above, or the cation solution without enzymes, provides various improved properties to the snack food product. The term "improved property" is defined herein as any property of a snack food product that is altered by the action of the one or more enzymes and/or cations relative to a snack food product in which the food pieces are not treated with such a solution. The improved property may include, but is not limited to, increased crispiness, reduced stickiness, increased firmness of the raw and/or blanched material, reduced browning from enzymatic and/or Maillard reactions, increased color brightening, increased color retention, increased color enhancement, reduced color fading, increased stiffness, increased rugged or smooth appearance, improved flavor, and reduced fat content. Many of these terms are defined more fully in U.S. Patent No. 7,056,544. The other terms are defined in accordance with their customary meaning as would be apparent to those of ordinary skill in the art.

It will be appreciated that crispness and/or stiffness can be increased in a measured or preselected way, so that, for instance, if a certain crispness or a certain stiffness is desired to achieve certain processing goals or for producing a certain finished snack food product, crispness or stiffness can be controlled by varying the amount of exposure to the one or more enzymes and/or cations.

The improved property may be determined by comparison of a snack or other food product prepared in accordance with the methods of the present invention, versus a snack or other food product prepared in accordance with prior art methods. Techniques for determining such improved properties achieved by use of the present methods are described herein. Organoleptic qualities may be evaluated using procedures well established in the food industry, and may include, for example, the use of a trained panel of sensory evaluators. Other methods could include texture analysis and comparisons such as those disclosed herein below.

Preferably, the food pieces are exposed to the enzyme solution (with or without cations), or the cation solution, for a time of 0.5 to 45 minutes, more preferably 1.0 to 15 minutes, most preferably 2.0 to 5 minutes.

In preferred embodiments the enzyme and/or cation treatment is applied prior to blanching. In alternative embodiments, the enzyme and/or cation treatment is applied concurrently during the blanching, or as an additional treatment after blanching. In the case of certain shaped food pieces such as sheeted products that are made from a combination of food materials or a dough, the enzyme and/or cation treatment may be applied after the shaped food pieces have been through the initial baking step that is customary in production of such products.

Blanching.

Several embodiments of the present invention include a step whereby the food pieces such as fruit and/or vegetable pieces are blanched. Preferably, the food pieces are blanched for a time period sufficient to achieve any of the following: 1) to inactivate any enzymes that naturally occur on the surface of the pieces and/or to inactivate any enzymes added during the enzyme treatment step described above; 2) to gelatinize at least a portion of the naturally occurring starches; 3) to remove excess free sugars so as to reduce Maillard browning and potential for formation of acrylamides; and 4) to improve texture and flavor. Typically, the food pieces are preferably blanched by immersion in an aqueous solution, preferably containing from 0.5% to 8% by weight, more preferably from 2% to 5% by weight, most preferably 3% by weight of one or more cations, as defined above. In preferred embodiments, the cations are selected from NaCl, KCl, $MgCl_2$ and $CaCl_2$. The blanching may be conducted at a temperature of preferably from 60°C to 120°C, more preferably from 70°C to 100°C. In alternate embodiments, the blanching may be conducted by exposure to steam (at ambient or higher pressures). Blanching is carried out preferably for 15 seconds to 10 minutes, more preferably for 40 seconds to 3 minutes, depending upon the amount of blanching desired. Alternatively, any known method of blanching such as microwave, Ohmic heating, super-heated steam and infrared heating can be used in accordance with the present invention. Additional oil can be applied by combining it with the blanching media, e.g., water or steam.

If necessary, the food pieces are then preferably drained or conveyed under an air curtain to remove excess water. In alternate embodiments, any known method of removing excess surface water may be employed. Salt can be added before, during or after blanching. Any salts that are suitable for use in foods may be used, but NaCl, KCl, $MgCl_2$ and $CaCl_2$ are preferred.

The blanching step may not be applicable and/or necessary in cases of certain shaped food pieces such as sheeted products that are made from a combination of food materials or a dough. The blanching step may not be necessary for other food pieces, e.g., meat, poultry, fish or shellfish, in which blanching is not employed in the food preparation step(s).

Oils and Oil-Water Emulsion Preparation:

Any predetermined amount of digestible and/or synthetic fat, such as an oil or oil substitute, can be added to and/or blended and mixed with the dough or mixture prior to cooking or alternatively can be applied in any process such as spraying the extruded dough or the food pieces, prior to, during, or after the pre-cooking steps. Preferably, at least a part, or most preferably all of the predetermined amount of oil is added to the food pieces by immersing them in an intimate mixture of oil that will be referred to herein as an oil-water emulsion, prior to cooking the food pieces, although the food pieces can be exposed to the oil-water emulsion at preselected point(s) during the cooking/drying process..

Preferably, the oil is a cooking oil not containing fatty acids such as canola, sunflower or safflower oils, which may be applied to the vegetable pieces by either, contacting the food pieces with an all-water emulsion, spraying the oil onto the food pieces or by flash soaking the food pieces in oil or by any other feasible method, such as applying to the blanch water or spraying onto a conveyer belt or a tray before and/or after food pieces are placed onto such tray or belt. In alternate embodiments where oil is used, although any food grade oil or oil substitute can be used, the preferred oils will be unrefined oils and those having a low smoke point, preferably extra virgin olive oil, hemp seed oil, walnut oil, sesame oil, flaxseed oil, coconut oil, unrefined canola oil, semi-refined canola oil, unrefined peanut oil, safflower oil, sunflower oil, high-oleic sunflower oil, unrefined corn oil, soy oil, unrefined soy oil, unrefined sesame oil, flavor infused oils, emulsified vegetable shortening or synthetic oils such as OLESTRA™. Alternative oils that offer health benefits, such as SMART BALANCE™ or ENOVA™, may be used either alone or in combination with other natural or synthetic oils such as those discussed above.

As used herein the term "oil" that is part of the oil-water emulsion can refer to liquid natural or synthetic oils that are liquid either under ambient conditions, e.g., 20-25°C (e.g., "room temperature") or that can be liquefied at the temperatures employed during application of the oil-water emulsion to the food pieces. Therefore, the term "oil" can refer to lipids that are generally referred to in the food processing industry as "fats" because they are solid or generally solid at room temperature, such as butter or margarine. However, a mixture of such a fat and water can be heated before or simultaneously with forming the emulsion such that the fat melts to form a liquid that can then be emulsified with the water to form the oil-water emulsion.

The term "oil-water emulsion" or "oil-water emulsion mixture," as used herein, can refer to a homogenous or substantially homogenous mixture of one or more oils and water, for example as opposed to a mixture of oil and water where the oil and water are separated into two phases with a distinct phase boundary. However, the term "oil-water emulsion" is used herein to refer to mechanically generated dispersions of oil in water or water in oil that are usually not true emulsions due to the absence of natural of synthetic surfactants. To the extent that some vegetable or animal oils inherently contain native surface-active agents, a true emulsion may form, but such emulsions are not essential to the practice of the invention. In one embodiment, the oil-water emulsions to not contain starch or modified starch.

Applying the oil-water emulsion to the food pieces, can include immersing the food pieces in the oil-water emulsion. The conditions by which the immersion of the food pieces in the oil-water emulsion is carried out can depend on several factors, including the composition of the oil-water emulsion and the desired final fat content of the food pieces.

The method can also include, before step (b), a step of preparing the oil-water emulsion, for example through mechanical means of mixing or agitating an oil phase and a water phase including, but not limited to, shaking, stirring, homogenizing, exposure to ultrasound (also referred to as sonolation), agitating, or running the oil and water phases through one or more mechanical pumps, such as high-shear pumps.

The oil-water emulsion can be formed by mixing together a predetermined amount of an oil and water. As is known in the art, oils and water are generally immiscible due to the polar nature of water and the non-polar nature of oils such that, typically, oil and water will separate into two phases, an oil phase and a water phase, in the absence of added surfactants. Nonetheless, simple vigorous mixing and other emulsification methods can cause one of the phases to be dispersed in the other (e.g., the oil phase being dispersed in the water phase, or the water phase being dispersed in the oil phase). The mixing can be performed via any mechanical method that is capable of mixing, and preferably, emulsifying the oil and water into an oil and water emulsion. Examples of mixing or emulsifying methods include, but are not limited to, homogenizing, sonolation, agitating, or running the mixture through one or a series of pumps, such as high-shear pumps.

The oil-water emulsion does not need to be stable, e.g., the emulsion need not be capable of being applied in, or remaining in, a homogenous or substantially homogenous state when and/or after it is applied to the food pieces. So long as a moisture removal step, described in more detail below, is applied relatively soon after the oil-water emulsion is applied, e.g., before the time it would take the oil-water emulsion to separate back into the water phase and the oil phase, the present method can still be effective. Therefore, the emulsion can be prepared relatively close in time to the application of the oil-water emulsion to the food pieces. Moreover, because the oil-water emulsion does not need to be stable or maintained after the application period, the emulsion does not need to be stabilized by exogenous emulsifiers or surfactants. The oil-water emulsion can, therefore, be generated by temporary mechanical means, including but not limited to: shaking, stirring, homogenizing, exposure to ultrasound, and through the use of mechanical pumps, including high-shear pumps. In a continuous process, the oil and water can be heated, if necessary, and emulsified. The oil-water emulsion can be maintained, for example by constant circulation of the oil and water through the emulsifying mechanism, and the food pieces can be passed through the emulsion for a controlled period of time, as on a moving bed at a fixed distance below the surface of the emulsion.

The fraction of oil in the oil-water emulsion, by weight, can depend on the desired amount of fat to be applied to the food pieces. In other words, the content of oil in the oil-water emulsion can be dictated by a desired final oil or fat content for the food pieces. The precise amount of oil used in the emulsion can be varied widely, e.g., from 1.5-85 wt-%, such as 5-75 wt-% or 10-50 wt-%, preferably 20-40 wt-% oil.

As described in more detail below, the amount of oil in the oil-water emulsion can depend on at least one, for example, at least two, at least three, and in some examples all four, of the following quantities: a desired final fat content of the final food product, a percentage of moisture in the final food product, the percentage of solids in the wet product, and the percentage by weight of carry-over of the oil-water emulsion onto the surface of the food piece after application of the oil-water emulsion. The desired final fat content can be chosen by the user. The percentage of moisture in the final product can also be chosen by the user, but can also generally be decided by the type of food pieces, the desired type of food product, and desired physical properties of the final food product. For example, a high moisture content can be retained in the finished food product, particularly if it is derived from fish, poultry or meat, e.g., up to 50%.

For example, for a potato chip-type food product, a final moisture content of 2-10 wt-% is typical. The percentage of solids in the wet food product can depend on the type of food piece, and can be readily determined. The carry-over of the oil-water emulsion to the food pieces after application can be a function of the dimensions of the food piece (such as thickness, length, etc.), a surface texture of the food piece, a viscosity of the emulsion, and a temperature at which the oil-water emulsion is applied, as well as subsequent surface loss of oil in the drying process, which can be readily determined by those versed in the art.

In an example, the oil content in the oil-water emulsion can be determined based on a predetermined, desired final fat content for the food pieces. It can first be assumed that the final amount of oil on the food pieces after the step of reducing moisture will be approximately equal to the amount of oil that the food pieces pick up during exposure to the oil-water emulsion. Individual food pieces may lose oil or gain oil, e.g., from rubbing between the food pieces during processing, but oil lost from one food piece will most likely be picked up by another food piece so that the aggregate oil loss across all the food pieces will approximately be zero. Equation [1] shows this relationship:

$$m_o = m_i \times f_{co} \times f_{oe} \qquad\qquad [1]$$

where $m_o$ is the final mass of oil on the food pieces (e.g., after applying the oil-water emulsion and reducing the moisture content), $m_i$ is the initial total mass of the food pieces (e.g., before applying the oil-water emulsion), $f_{co}$ is the fractional carryover rate of oil from the oil-water emulsion onto the food piece, and $f_{oe}$ is the fractional oil content in the oil-water emulsion.

The fractional carryover rate of oil from the oil-water emulsion $f_{co}$, can be defined as the percentage, by weight, of carryover of the oil-water emulsion onto the surface of the food pieces. The fractional carryover $f_{co}$ is generally a constant that can depend on the type of food piece (i.e., what type of food, such as potatoes, apples, poultry, fish, etc.), the shape and dimensions of the food pieces (e.g., slices, sticks, or the like, and the thickness, length, or width of the slices or sticks), the surface texture of the food pieces, and the viscosity of the oil-water emulsion. In some examples, oil will be lost from the food pieces during conveyance to the moisture-reduction step or within the moisture-reduction apparatus (e.g., during drying), but this percentage of oil loss can also be folded into the fractional carryover $f_{co}$.

In some examples, it can be desirable to determine the oil content of the oil-water emulsion that should be used based on the desired final fat content of the food pieces. Therefore, Equation [1] can be solved for the oil fraction of the oil-water emulsion, as shown in Equation [2].

$$f_{oe} = \frac{m_o}{m_i \times f_{co}} \qquad [2]$$

The mass of oil on the food pieces $m_o$ can be rewritten as the product of the fractional oil content on the food pieces, $f_o$, and the final mass of the food pieces, $m_{fp}$. The mass of the food pieces $m_{fp}$ can be split into its three components, the mass of the solids of the food pieces, $m_s$, the final mass of water on the food pieces, $m_w$, and the mass of the oil on the food pieces $m_o$. Combining these expressions, the mass of the oil $m_o$ can be redefined by Equation [3].

$$m_o = f_o(m_s + m_w + m_o) \qquad [3]$$

Equation [3] can be inserted into Equation [2] to produce Equation [4].

$$f_{oe} = \frac{f_o}{f_{co}} \times \frac{(m_s + m_w + m_o)}{m_i} \qquad [4]$$

The fraction $\frac{m_s}{m_i}$ is the same as the initial fractional solids content $f_s$ of the food pieces, which will generally be a known or easily determinable property of the food pieces. Replacing this fraction with $f_s$ results in Equation [5].

$$f_{oe} = \frac{f_o}{f_{co}} \left( f_s + \frac{m_o}{m_i} + \frac{m_w}{m_i} \right) \qquad [5]$$

Equation [5] can be manipulated slightly to result in Equation [6].

$$f_{oe} = \frac{f_o}{f_{co}} \times f_s \left( 1 + \frac{m_o}{m_i \times f_s} + \frac{m_w}{m_i \times f_s} \right) \qquad [6]$$

As described above, $f_s$ can be defined as $\frac{m_s}{m_i}$, so that Equation [6] can be rewritten as Equations [7] and [8].

$$f_{oe} = \frac{f_o}{f_{co}} \times f_s \left( 1 + \frac{m_o}{m_i \left( \frac{m_s}{m_i} \right)} + \frac{m_w}{m_i \left( \frac{m_s}{m_i} \right)} \right) \qquad [7]$$

$$f_{oe} = \frac{f_o}{f_{co}} \times f_s \left( 1 + \frac{m_o}{m_s} + \frac{m_w}{m_s} \right) \qquad [8]$$

The fraction $\frac{m_o}{m_s}$ is the same as the oil fraction in the food pieces, defined as $f_o$ above, and the fraction $\frac{m_w}{m_s}$ is the water fraction in the food pieces, which can be defined as $f_w$. Substituting these fractions with $f_o$ and $f_w$ in Equation [8] can provide a user-friendly Equation [9].

$$f_{oe} = \frac{f_o}{f_{co}} \times f_s (1 + f_o + f_w) \qquad [9]$$

Equation [9] provides an equation that allows a user to determine the fraction of oil $f_{oe}$ that should be used in the oil-water emulsion as a function of the following four parameters:

(1) a desired final fraction of oil on the food pieces, designated as $f_o$ in Equation [9], which is the target parameter and can be set by the user;

(2) a loss-adjusted carry-over fraction, which can fold in properties of the food piece, such as food piece geometry, thickness, surface texture, etc., and properties of the oil-water emulsion, such as viscosity and temperature of the oil-water emulsion during application, designated as $f_{co}$ in Equation [9], which, as noted above, can be readily determined by the user;

(3) the initial solids fraction of the food pieces, designated as $f_s$ in Equation [9], which can be known or readily determined by a user; and

(4) the final moisture fraction $f_w$, which can also be selected by the user, but which is often set depending on the type of food product, e.g., 2 wt% for potato chips.

As noted above, if an oil is to be used that is solid or substantially solid at room temperature, the solid oil can be heated to above its melting point to form a heated liquid oil either before or after contacting the oil with the water so that the now liquid oil can be emulsified or substantially homogenously mixed with the water to form the oil-water emulsion.

The oil-water emulsion can also include other additives, such as one or more cations, one or more nutritional additives, one of more flavoring additives, and one or more edible non-toxic surfactants. In an example, the oil-water emulsion can include from 0.5 wt-% to 8 wt-%, such as from 2 wt-% to 5 wt-%, for example 3 wt-% of one or more cations, as defined above. In some examples, the cations in the oil-water emulsion can be selected from NaCl, KCl, $MgCl_2$ and $CaCl_2$.

Examples of nutritional additives, if included in the oil-water emulsion, that can be used include, but are not limited to, nutrients, vitamins, and minerals, such as Vitamin A, Vitamin, B6, Vitamin B12, Vitamin C, Vitamin D, Thiamin, Riboflavin, Niacin, Folic Acid, Phosphorous, Magnesium, Copper, Calcium, Zinc, and Iron. The inclusion of nutritional additives in the oil-water emulsion can result in a food product that is nutritionally fortified and provides an opportunity to make snack food products that are healthier. In an example, the oil-water emulsion can include from 0.25 wt-% to 5 wt-% nutritional additives. Examples of flavoring additives, if included in the oil-water emulsion, that can be used include, but are not limited to, flavor enhancers and seasoning blends, such as table salt (NaCl), sugar (e.g., sucrose or fructose), herb extracts, adjuvants or flavorings, such as fruit extracts and vegetable extracts or a combination thereof can be included in the respective flavorings, salt, sugar, herbs, fruits or vegetables, in the oil-water emulsion, which can thereby incorporate these flavoring components into the food pieces. Alternately, the food pieces can be soaked in or infused with concentrated flavor extracts before applying the oil-water emulsion, wherein the concentrated flavor extracts can be aqueous or non-aqueous. In an example, the oil-water emulsion can include from 0.25 wt-% to 5.0 wt-% flavoring additives.

In alternate embodiments, preservatives, both natural and synthetic antioxidants can be added to the product to extend shelf life. Any number of antioxidants can be utilized such as tert-Butylhydroquinone (TBHQ), Butylated hydroxytoluene (BHT), Butylated hydroxyanisole (BHA), and Ethylenediaminetetraacetic acid (EDTA), or more natural forms such as herb extracts, fruit extracts and vegetable extracts or a combination thereof can be infused into the snack food product by steeping or soaking the cut food pieces in a solution containing these ingredients, thereby incorporating these antioxidant components into the food pieces either in the blanch water and/or by having a separate step following or prior to the blanching step in which the antioxidants are fused into the cut food pieces. Alternately, the antioxidants can be applied directly to the food pieces using the oil/water emulsion. Antioxidants can be added directly to the oil emulsion to improve/extend the shelf life of the finished products. These antioxidants can be synthetic forms or naturally sourced and will help stabilize the finished products to reduce the development of off flavor, rancid, and painty flavor notes. The addition of these antioxidants directly to the oil emulsion provides an even distribution of the antioxidants to the finished product. The integrity of the flavor of the oil in the emulsion is stabilized and allows for longer distribution and storage of the finished food products. For example, a de-odorized concentrated form of rosemary extract can be added to the oil emulsion at a rate of 0.05% to 0.10% to prevent the development of off flavors and odors of the finished chips during distribution and storage.

Oil-Water Emulsion Application:

The processes described herein can include one or more steps whereby an oil-water emulsion can be applied to the food pieces. In one embodiment, the emulsion does not comprise starch. In an example, application of the oil-water emulsion can be via immersion of the food pieces in a bath of the oil-water emulsion for a predetermined period of time and at a predetermined temperature. However, other methods of applying the oil-water emulsion can be used, such as spraying, pouring or painting.

Immersing the food pieces in the oil-water emulsion can be preferred because it can lead to an even application of the oil-water emulsion. In an example, the food pieces can be immersed in the oil-water emulsion for a time period and temperature sufficient to apply a predetermined amount of the oil-water emulsion to the food pieces. The immersion in the oil-water emulsion can also provide for one or more of the following additional goals, similar to blanching of food pieces: (1) to inactivate any enzymes that naturally occur on the surface of the pieces and/or to inactivate any enzymes added during the enzyme treatment step described above; (2) to gelatinize at least a portion of the naturally occurring starches; (3) to remove excess free sugars so as to reduce Maillard browning and potential for formation of acrylamides; and (4) to improve texture and flavor. In an example, the time and temperature of application in the oil-water emulsion can be sufficient to achieve at least one of the additional goals listed above, for example at least two of the additional goals, such as at least three of the additional goals, and in some examples, all four of the additional goals can be achieved by the application of the oil-water emulsion.

If the application of the oil-water emulsion is intended to perform a blanching function (e.g., one or more of inactivating enzymes, gelatinizing starches, removing excess free sugars, and improving texture and flavor), then the oil-water emulsion can be heated to a temperature and the food pieces can be immersed in the oil-water emulsion for an amount of time that is sufficient to blanch the food pieces and to provide for application of a predetermined amount of oil to the food pieces from the oil-water emulsion. If it is found desirable to contact the food pieces with the oil-water emulsion for a period of time and/or temperature that is not sufficient to blanch the food pieces, then a separate blanching step using water, oil, an oil-water mixture, steam at ambient or higher pressure, or dry blanching, can be employed.

The emulsion application is preferably conducted at ambient temperatures of 20-30°C but can be conducted over a wide temperature range, e.g., from -20 to 250 degrees F. (-20-121°C) , e.g., 0°C ( 32°F) to 100°C ( 212°F), such as from 60°C ( 140°F) or 65°C ( 150°F) to 93°C ( 200°F) or 100°C ( 212°F), and over a wide range of time periods, e.g., from 1-2 seconds to 1-2 hours, preferably from 3 seconds to 1 hour, e.g., from 15 seconds to 5 minutes, or from 5 seconds to 15 seconds. Preferably the time and temperature are selected so a substantial amount of water is not lost, e.g., a temperature below 100°C ( 212°F), preferably below 35°C.

The emulsion may be applied under conditions using various pressures, including atmospheric pressure under the ambient, at the ambient of above ambient pressure. Accordingly, the emulsion will be applied to the food pieces and products in open chambers or in closed chambers under high pressure and/or under vacuum conditions.

However, the food pieces need not be partially cooked or "blanched" in this step, and preferably will not be blanched in this step. If a separate blanching step is needed, it may be conducted at a temperature of from 60°C ( 140°F) to 120°C ( 250°F), such as from 65°C ( 150°F) to 100 °C ( 212°F), or from 60°C ( 140°F) to 93°C ( 200°F) or to 98°C ( 210°F). The blanching can be conducted for 15 seconds to 10 minutes, such as from 40 seconds to 3 minutes, depending upon the amount of cooking desired.

The oil-water emulsion can be heated and circulated during the application step, and homogeneity can be maintained as disclosed hereinabove. The food pieces can be agitated during application and exposure to the oil-water emulsion.

It is well established that temperature has a strong influence on the viscosity of fluids, with viscosity generally decreasing with increase in temperature. This follows through to the oil-water emulsion concept. The oil-water emulsion can be cooled and circulated during the application step, to control the viscosity and therefore the amount of emulsion that is applied to the food pieces in the process. Since most oils change dramatically in viscosity as they are heated, it is advantageous to control this viscosity to provide a more consistent coating of the emulsion on the food pieces. It was found that for corn oil, etc. the optimal temperatures are lower-in the range of 75-120°F (24-49°C), where the viscosity for corn oil ranges from 54 cP at 75°F to 14 cP at 120°F (0.054-0.014 Pascal seconds).

In certain embodiments the oil-water emulsion may be maintained and /or applied to food pieces at a higher temperature. Such temperature could reach as high as just below the boiling point of the oil-water emulsion.

The oil-water emulsion may be filtered to remove any coagulated materials or undesired fractions of the food pieces. Any available method of filtration may be used including paper or mechanical filters and devices and/or separation and membrane devices and/or methods. In certain embodiments filers can be used that may remove any substance, including bacteria, as small as 2 microns. The oil-water emulsion may be led through or circulated through the filtering device at different volumetric rates per minute.

In the case of starchy food-pieces, starch may be removed from the food-pieces prior to enzyme and/or cation treatment or the blanching step, during such steps, or both. Raw starch is often removed prior to enzyme and/or cation treatment or the blanching step. Solubilized and/or crystalized starch may be removed from the oil-water emulsion or in the enzyme and/or cation and/or blanching steps using various methods and devices including filtration.

In some examples, the food pieces can be rinsed, then drained or conveyed under an air curtain to remove excess emulsion. In alternate embodiments, any known method of removing excess surface liquid can be employed. Salt can be added before, during or after application of the oil-water emulsion. Any salts that are suitable for use in foods can be used, but NaCl, KCl, MgCl$_2$ and CaCl$_2$ are preferred.

Reducing Moisture Level ("Cooking" or "Drying").

The moisture in the food pieces is preferably reduced to a moisture level of 0.2 to 80% by weight, preferably 0.5 to 5% by weight. This moisture reduction follows the pretreatment steps described above and may be achieved in a number of different ways.

In one embodiment of the invention, the moisture reduction step includes cooking the food pieces in one or more dryers or ovens independently selected from the group consisting of forced air convection ovens, fluidized bed dryers/ovens, vibrating fluidized bed dryers/ovens, impingement dryers/ovens, pulsed fluidized bed dryers/ovens (e.g., Aero Pulse dryers), rotary dryers/ovens, rotary drum dryers/ovens, rotary spiral drum dryers/ovens, tray ovens, stationary dryers/ovens, spiral roasters/dryers (such as, for example, FMC Spiral Roto-Louvre Roaster/Dryers), microwave dryers/ovens, infrared dryers/ovens, super heat airless driers, vacuum driers, vacuum belt dryers and ohmic dryers, or any similar drying/cooking apparatus that can be operated in the absence of frying the food pieces in oil. In one embodiment, the food pieces are cooked for 0.5 to 40 minutes at a drier/oven(s) temperature of from 160°F (70°C) to 400°F (205°C), more preferably from 275°F (135°C) to 325°F (165°C) with an air velocity of 500-1500 feet/min.

In another embodiment of the invention, the moisture reduction comprises bringing the food pieces to a first drier/oven(s) temperature for a first time period, and thereafter bringing the food pieces to a second drier/oven(s) temperature for a second time period. Preferably, bringing the food pieces to the first drier/oven(s) temperature for the first time period, such as but not limited to a oven/drier(s) temperature of 160°F to 400°F, preferably between 149 to 204°C (300°F to 400°F), e.g., 163 - 325°F-380°F for a time of 0.5 to 40 minutes.

This first stage reduces the initial moisture level to an intermediate moisture level, e.g., of 80-89 wt-% to 10% to 80% by weight, e.g., 35-70 wt-% or 40-65 wt-%. The food pieces are optionally subsequently dried in the first or the second drier/oven(s) temperature for the second time period, such as but not limited to an oven/drier temperature of 160°F to 375°F, preferably between 250°F and 350°F, and more preferably between 260°F to 290°F, such as between 160°F to 193°C (260-290°F), for a time of 4 to 35 minutes, preferably 5 to 12 to 15 minutes and more preferably 6 to 11 minutes. This two stage cooking procedure reduces the intermediate moisture level to the final moisture level of 0.5 to 10%. In preferred embodiments, the second temperature or temperature range is lower than the first temperature, or temperature range.

In three-stage moisture reduction steps, the third temperature is preferably lower than the first and the second temperatures. However, the oven/drier temperatures in any stage can be varied within the ranges given.

The actual moisture content selected after any stage can depend on the type of food piece being processed and the desired type of final food product. For example: potato food pieces that are being prepared as French fries typically can have a final moisture content that is higher than potato chips.

In other examples, the first stage of the moisture reduction process can comprise drying the food pieces in a rotary dryer, a rotary drum dryer, a rotary spiral drum dryer, a fluidized bed dryer/oven, a vibrating fluidized bed dryer/oven, or a microwave dryer/oven, to remove up to 20-30% by weight, such as up to 40% by weight, for example up to 50% by weight, such as up to 60% by weight, for example up to 70% by weight, such as up to 75% by weight, for example up to 80% by weight, such as up to 85% by weight, for example up to 89% by weight, such as up to 90% by weight of the initial moisture of the food pieces. Thereafter, the optional second cooking stage, and optionally, a third stage, can reduce the moisture level to a desired final moisture level, such as from 0.5 wt-% to 10 wt-%, e.g., to 2-3 wt-% to 5-7 wt-%.

In an example, the food pieces to which the oil-water emulsion is applied can be dehydrated in a first step using a rotary dryer, a rotary drum dryer, a rotary spiral drum dryer, or any similar apparatus at a temperature preferably ranging from 93 °C ( 200 °F) to 200 °C ( 390 °F), such as from 135 °C ( 275 °F) to 175 °C ( 350 °F), such as from 150 °C ( 300 °F) to 163 °C ( 325 °F) for a time interval of from 2 minutes to 20 minutes, such as from 5 minutes to 15 minutes, for example from 8 minutes to about 12 minutes prior to further cooking in an impingement oven/dryer, fluidized bed oven/dryer (including their vibratory versions), microwave oven/dryer, aero pulse oven/dryer, conviction oven/dryer, tray oven/dryer, stationary oven/dryer, continuous belt oven/dryer of any type or the like. Alternatively, in another example, a fluidized bed oven/dryer (such as, for example, those available from The Witte Company, or the Carrier Vibrating Equipment, Inc. or the like) can be used in a process of pre-drying (dehydrating) food products in place of a rotary dryer of any type, as described above. In yet another example, the entire drying or dehydrating process can be achieved by using a fluidized bed oven/dryer (or a set thereof) such as those mentioned above.

In an example, the partially dehydrated cut food pieces can then be transferred to an impingement oven, a fluidized bed dryer/oven or any other similar equipment via a conveyor belt or any other conveying device or method. The partially dehydrated cut food pieces can then be cooked at oven/drier temperatures of 107 °C ( 225 °F) to 190 °C ( 375 °F), such as from 135 °C ( 275 °F) up to 177 °C ( 350 °F), for example from 150 °C ( 300 °F) up to 163 °C ( 325 °F) for a period of from 4 minutes to 15 minutes, such as from 6 minutes to 12 minutes, for example from 8 minutes to 10 minutes. The resultant snack food products can then be cooled and optionally seasoned as desired and packaged for distribution and consumption.

In still other examples, the reduction of the moisture level to the final moisture level of 0.5 wt-% to 10 wt-% can be accomplished solely using a rotary dryer, rotary drum dryer, rotary spiral drum dryer, fluidized bed dryer/oven or vibrating fluidized bed dryer/oven, in one or more, e.g., 2 or 3, drying steps. No additional cooking procedure need be utilized in this example. Generally the same temperature and time conditions indicated above can be used in such an example, over one or more stages, although it is preferred that, in a two stage drying process that the second temperature is lower than the first temperature.

Another example of moisture reduction can be drying/cooking with the use of spiral roasters/dryers. The drying principles and product behavior for this method closely mirror rotary ovens and rotary drum drying, except the internal spiral allows for precise control of drying time within the vessel. Typically, in spiral roaster/dryers the drying air entry into the product bed between the spiral flights can be through a perforated plate or screen wrapped around the flights. Precise control of drying time within the vessel combined with the use of this method can result in a higher product quality, process effectiveness and added process efficiencies and output levels not experienced or expected previously.

During any of the stages, the food pieces can be exposed to air at an air speed of from 60 meters per minute ( 200 feet per minute) to 4570 meters per minute (15,000 feet per minute). According to additional examples, even lower air velocities can be used depending on the food pieces being prepared or the equipment being used. The process is further controlled by selectively increasing or decreasing, or both, the air speed to control the exposure of the product to temperature and airflow, thereby optimizing the quality of the finished product. Sequential adjustments to temperature and airflow can allow for a controlled drying process that beneficially maintains the product temperature below temperatures that cause browning and caramelization until the product reaches a target moisture content. Manipulation of the different zones of temperature and air velocity allow for optimization of the texture, color, and flavor, as well as economical efficiency of the process.

During any of the stages, the food pieces may be exposed to air at an air speed of from 200 to 15,000 feet per minute. According to additional, alternative embodiments of the present invention, even lower air velocities may be used depending on the food pieces being prepared and/or the equipment being used. The process is further controlled by selectively increasing and/or decreasing the air speed to control the exposure of the product to temperature and airflow, thereby optimizing the quality of the finished product. Sequential adjustments to temperature and airflow allow for a controlled drying process that beneficially maintains the product temperature below temperatures that cause browning and caramelization until the product reaches a target moisture content. Manipulation of the different zones of temperature and air velocity allow for optimization of the texture, color, and flavor, as well as economical efficiency of the process.

Other equipment, such as, for example, any similar type rotary dryer or rotary drum dryer, "flash dryers", airless or superheated steam dryer such as, for example, those available from Applied Chemical Technologies, Carrier Vibrating, Inc. and The Dupps Company, may be used in place of the dryers. Alternatively, microwave, infrared, impingement, vibrating impingement, tray oven, convection oven, stationary oven, fluidized bed or vibrating fluidized bed drying, vacuum drying, vacuum belt drying or the like can be employed in the process of partially or completely dehydrating the cut food pieces, each resulting in a different degree of efficiency and level of output. The use of a steam blancher, such as those available from the Lyco Company, alone or in combination with any of the foregoing equipment, provide numerous additional alternatives for either a partial or complete dehydrating process. When applicable, any versions of the foregoing equipment described herein in relation to the various embodiments of the present invention, such as, for instances, batch or continuous processing equipment, static or vibrating equipment designs may be employed.

Moisture sensing equipment such as those available from Drying Technologies, Inc. (i.e., DTI 500, DTI 5000) can be installed inside the rotary dryer or the like to ensure proper drying conditions on an automated basis.

In preferred embodiments, the partially dried food pieces are then transferred to an impingement oven, a fluidized bed dryer/oven, a vibrating fluidized bed dryer/oven, a vacuum belt dryer/oven or any other similar equipment via a conveyor belt or any other conveying device or method. After moisture reduction to the final level, the resultant snack food products may then be cooled either at ambient or reduced temperatures, and optionally seasoned and/or coated as desired and packaged for distribution and consumption.

Optional seasoning blends can be applied to products preferably using adhesives such as gums, starches, proteins, that can be used to create a sticky surface on the products for adherence of the seasoning blends as is generally known within the food industry.

The crispness of the resulting snacks food products, preferably chips or strips, is believed to be generated by several factors including the cook-out of the starch, the resulting moisture content, the thickness of the resulting food portion, exposure time to enzymes, surface area per cation/enzyme concentrations, drying curve, cooking time and temperature, the variety of vegetable, potato or type of plant food product used. It is believed that if vegetable pieces are dried too fast, the surfaces seal and inside moisture cannot escape, resulting in big pockets of moisture that is believed to be undesirable. On the other hand, if the vegetable pieces are dried too slowly, they may just get hard like dehydrated potatoes, so it is believed to be preferable to find a middle ground in this regard.

To obtain a blistered effect on the product surface similar to the typical appearance observed when foods are fried, the food pieces are preferably cooked at an oven/drier temperature of at least 265°F after halfway through the moisture removal. Next, the food pieces are cooked at an oven/drier temperature of 310°F with a high velocity air flow (e.g., an air speed of 500 to 15,000 feet per minute) to achieve a final moisture content of 2 to 5%. The final drying when using certain types of equipment such as a vacuum dryer may take place at temperatures below those indicated above.

The process efficiency can be further improved by, after the moisture reduction is complete, running the food pieces through an "Equilibrator" system, that takes the hot product, exhausts the air from it, pulling off the heat thereby cooling it as the final moisture is removed.

Embodiments of the invention contemplate reducing the moisture level down to the intermediate moisture level by any of the methods described herein, cooling and storing the moist product at ambient, refrigeration or freezer conditions, then subsequently frying, drying or baking the product to achieve the final moisture level. Alternatively, the frying step may immediately follow the steps of reducing the moisture level down to the intermediate moisture level.

In addition, the invention contemplates flash frying or baking any of the snack food products prepared in accordance with the invention, either in a commercial or retail setting or at home.

Other aspects and advantages of the present invention will be understood upon consideration of the following examples.

Example 1. Application of Oil via Oil-Water Emulsion

Potatoes were washed and sliced to an average slice thickness of 1.95 mm. The sliced potatoes were washed with water and then placed in an amylase enzyme solution formed by adding 4945 grams ( 10.9 lbs) of amylase (Specialty Enzymes & Biotechnologies Co., SEBamyl L Liquid Beta-Amylase) and 3265 grams ( 7.2 lbs) of calcium chloride (Nelson-Jameson, Inc., Food-Grade 32% Calcium Chloride) to 397 liters ( 105 gallons) of warm water (41.1 °C, 106 °F). The potato slices were immersed in the amylase enzyme solution for 3 minutes before draining. After draining, the enzyme-treated potato slices were blanched in 87.8 °C ( 190 °F) water for 90 seconds. The blanched potato slices were dipped into cold water for 15 seconds to halt cooking, then drained.

An oil-water emulsion was formed by adding 3.8 liters ( 1 gallon) of corn oil to 185 liters ( 49 gallons) of water. A circulation pump emulsified the oil and water mixture to a cloudy, even, bluish-white texture to form an oil-water emulsion. Tests of the oil-water emulsion via volumetric weighing showed an oil content at the surface of 28% by weight. The enzyme-treated and blanched potato slices were immersed in the oil-water emulsion mixture for a period of 5 seconds to 10 seconds at a depth of one inch (2.5 cm) on a moving belt. The oil-treated slices were dried and cooked as follows: Dryer stage 1 (batch mode): Food pieces were dried at 380°F (193°C) for 7 minutes, and then at 360°F (182°C) for another 7 minutes in a vibrating fluidized bed dryer, for a total of 14 minutes in stage 1. The bed is drilled with 3/16" (0.48 cm) diameter holes spaced 1" (2.5 cm) apart. Vibration angle is 3 degrees backwards from vertical. Process air (a measure of how much air is flowing through the dryer) measures a 3" (7.6 cm) pressure drop. Pressure in the plenum (a measure of air velocity through the holes) is 9.75" (24.8 cm).

Dryer stage 2 (batch mode): Food pieces were dried at 260-290°F (127-143°) for 13 minutes in a vibrating fluidized bed dryer. The bed is drilled with 1/8" diameter holes paced 1" (2.5 cm) apart. Vibration angle is vertical. Process air (a measure of how much air is flowing through the dryer) measures a 0.5" (1.27 cm) pressure drop. Pressure in the plenum is 4.5-5" (11.4-12.7 cm).

The fractional carryover rate of the oil-water emulsion to the potato slices was measured as 7% and the potato solids fraction was determined to be 21%. Using Equation [9], described above, the predicted final oil content of the potato slices (chips) was 9 wt% oil, which was confirmed by laboratory analysis. The final moisture content was 3 wt-%.

Example 2. Oil Application via Oil-Water Emulsion.

Potatoes are washed and sliced to an average slice thickness of 1.7 mm. The sliced potatoes are washed with water and then placed in an amylase enzyme solution formed by adding 4945 grams ( 10.9 lbs) of amylase (Specialty Enzymes & Biotechnologies Co., SEBamyl L Liquid Beta-Amylase) and 3265 grams ( 7.2 lbs) of calcium chloride (Nelson-Jameson, Inc., Food-Grade 32% Calcium Chloride) to 397 liters ( 105 gallons) of warm water (41.1 °C, 106 °F). The potato slices are immersed in the amylase enzyme solution for 3 minutes before draining. After draining, the enzyme-treated potato slices are blanched in 87.8 °C ( 190°F) water for 90 seconds. The blanched potato slices are dipped into cold water for 15 seconds to halt cooking, then drained.

An oil-water emulsion is formed by adding 40 liters of sunflower oil to 160 liters of water. A homogenizer produced an even oil-water emulsion mixture that was 25% oil by volume. The enzyme-treated and blanched potato slices of thickness of 1.7 mm are immersed in the 25% oil emulsion for a period of 5 seconds to 10 seconds.

Dryer stage 1 (batch mode): Food pieces are dried at 380°F (198°C) for 7 minutes, and then at 360°F (182°C) for another 7 minutes in a vibrating fluidized bed dryer, for a total of 14 minutes in stage 1. The bed is drilled with 3/16" (0.48 cm) diameter holes spaced 1" (2.5 cm) apart. Vibration angle is 3 degrees backwards from vertical. Process air (a measure of how much air is flowing through the dryer) measures a 3" (7.6 cm) pressure drop. Pressure in the plenum (a measure of air velocity through the holes ) is 9.75" .

Dryer stage 2 (batch mode): Food pieces are dried at 260-290°F for 13 minutes in a vibrating fluidized bed dryer. The bed is drilled with 1/8" diameter holes paced 1" apart. Vibration angle is vertical. Process air (a measure of how much air is flowing through the dryer) measures a 0.5" pressure drop. Pressure in the plenum is 4.5-5" (24.8 cm).

The fractional carryover rate of the sunflower oil-water emulsion to the potato slices is measured as 9% and the potato solids fraction is determined to be 19%. The final oil content of the potato slices (chips) is determined to be 12 wt-% oil. The final moisture content is 1-3 wt-%.

Example 3 Sweet Potato Chips Using Oil-in-Water Emulsion

Sweet potatoes are washed and sliced to an average slice thickness of 2 mm. The slices were placed in a solution formed by adding 12 lbs (5443g) of sea salt (1.4 wt-%) and 1.3 lbs (590g) (0.15 wt-%) of calcium chloride (Nelson-Jameson, Inc., Food-Grade 32% Calcium Chloride) to 397 liters ( 105 gallons) of warm water (41.1 °C, 106 °F). The sweet potato slices are immersed in the salt solution for 5 minutes before draining. After draining, the enzyme-treated potato slices are blanched in 85 °C ( 185 °F) water for 90 seconds. The blanched potato slices are dipped into cold water for 15 seconds to halt cooking, then drained.

An oil-water emulsion is formed by adding 1 gal (4.55 litres) of corn oil to 55 liters of water. A homogenizer produced an oil-water emulsion mixture that was 35% oil by volume at the surface. The blanched potato slices were immersed in the emulsion mixture just below the surface for a period of 5 to 10 seconds at room temperature.

Dryer stage 1 (batch mode): Potato slices were dried at 345°F (174°C) for 7 minutes in a vibrating fluidized bed drier, he bed is drilled with 3/16" (0.48 m) diameter holes spaced 1" (2.5 cm) apart. Vibration angle was 3 degrees backwards from vertical. Process air (a measure of how much air is flowing through the dryer) measured a 2.5" (6.3 cm) pressure drop. Pressure in the plenum (a measure of air velocity through the holes) was 7.55" (19.2 cm).

Dryer stage 2 (batch mode): Potato slices were dried at 250°F (121°C) for 7 minutes in a vibrating fluidized bed dryer. The bed is drilled with 1/8" (0.32 cm) diameter holes spaced 1" (2.5 cm) apart. Vibration angle is vertical. Process air (a measure of how much air is flowing through the dryer) measured a 1.2" (3 cm) pressure drop. Pressure in the plenum is 4.5-5" (11.4-12.7 cm).

The fractional carryover rate of the oil-water emulsion to the sweet potato slices (chips) is measured as 6.5% and the potato solids fraction is determined to be 23%. The final oil content of the sweet potato slices was calculated to be 10 wt% oil. The final moisture content was 3 wt-%.

Example 4. Potato Chip Application of Oil via Oil-Water Emulsion

Chipping variety potatoes were washed and sliced to an average slice thickness of 0.070 inches (0.18 cm). The sliced potatoes were washed with water and then placed in an amylase enzyme solution formed by adding 4945 grams ( 10.9 lbs) of amylase (Specialty Enzymes & Biotechnologies Co., SEBamyl L Liquid Beta-Amylase) and 3265 grams ( 7.2 lbs) of calcium chloride (Nelson-Jameson, Inc., Food-Grade 32% Calcium Chloride) to 397 liters ( 105 gallons) of warm water (41.1 °C, 106 °F). The potato slices were immersed in the amylase enzyme solution for 3 minutes before draining. After draining, the enzyme-treated potato slices were blanched in 87.8 °C ( 190 °F) water for 90 seconds.

An oil-water emulsion was formed by adding 3.8 liters ( 1 gallon) of corn oil to 185 liters ( 49 gallons) of water. A circulation pump emulsified the oil and water mixture to a cloudy, even appearance to form an oil-water emulsion at a temperature of 95°F (35°C). The enzyme-treated and blanched potato slices were immersed in the oil-water emulsion mixture for a period of 5 seconds to 10 seconds at a depth of one inch (2.5 cm) on a moving belt. The oil-treated slices were dried and cooked as follows: The food pieces were dried at a process temperature of 380°F-360°F (193-182°C) for 13 minutes, and then at 260-275°F (127-135°C) for another 13 minutes in a multi zone vibrating fluidized bed dryer.

The fractional carryover rate of the oil-water emulsion to the potato slices was measured as 7% and the potato solids fraction was determined to be 21%. Using Equation [9], described above, the predicted final oil content of the potato slices (chips) was 9 wt% oil, which was confirmed by independent laboratory analysis at 8.8% fat. The final moisture content was 3.4 wt-%. A sensory panel was conducted on these finished potato chips with excellent acceptability on flavor, texture and appearance as compared to fried potato chips currently on the market.

Example 5. Potato Stick Application of Oil via Oil-Water Emulsion

Chipping variety potatoes were washed and sliced to an average piece size of 0.25 in. x 0.20 inches x 2.0-3.0 inches (0.63 x 0.5 x 5-7.6 cm). The raw potato sticks were washed with water and then placed in an amylase enzyme solution formed by adding 4945 grams ( 10.9 lbs) of amylase (Specialty Enzymes & Biotechnologies Co., SEBamyl L Liquid Beta-Amylase) and 3265 grams ( 7.2 lbs) of calcium chloride (Nelson-Jameson, Inc., Food-Grade 32% Calcium Chloride) to 397 liters ( 105 gallons) of warm water (41.1 °C, 106 °F). The potato sticks were immersed in the amylase enzyme solution for 3 minutes before draining. After draining, the enzyme-treated potato slices were blanched in 87.8°C ( 190°F) water for 90 seconds.

An oil-water emulsion was formed by adding 3.8 liters ( 1 gallon) of corn oil to 185 liters ( 49 gallons) of water. A circulation pump emulsified the oil and water mixture to a cloudy, even appearance to form an oil-water emulsion at a temperature of 95°F (35°C). The enzyme-treated and blanched potato pieces were immersed in the oil-water emulsion mixture for a period of 5 seconds to 10 seconds at a depth of one inch (2.5 cm) on a moving belt. The oil-treated pieces were dried and cooked as follows: The food pieces were dried at a process temperature of 380°F-360°F (193-182°C) for 13 minutes, and then at 260-275°F (127-135°C) for another 14 minutes in a multi zone vibrating fluidized bed dryer.

An independent laboratory analysis resulted in 8.8% fat with 3.4% moisture content on the finished product. Sensory experts determined that this product rated excellent acceptability on flavor, texture and appearance as compared to fried potato sticks currently on the market that contained much higher amounts of oil.

Example 6. Sweet Potato Chip Application of Oil via Oil-Water Emulsion

Garnet Sweet Potatoes were washed and sliced to an average slice thickness of 0.080 inches (0.2 cm). The slices placed in a solution formed by adding 4.77 kg./ 10.5 lbs. sea salt and 1.70 kg./ 3.78 lbs of calcium chloride (Nelson-Jameson, Inc., Food-Grade 32% Calcium Chloride) to 397 liters ( 105 gallons) of water. The potato slices were immersed in the solution for 5 minutes before draining. After draining, these pre-treated potato slices were blanched in 87.8 °C ( 190 °F) water for 2 minutes.

An oil-water emulsion was formed by adding 3.8 liters ( 1 gallon) of corn oil to 185 liters ( 49 gallons) of water. A circulation pump emulsified the oil and water mixture to a cloudy, even appearance to form an oil-water emulsion at a temperature of 95°F (35°C). The pre-treated and blanched sweet potato slices were immersed in the oil-water emulsion mixture for a period of 5 seconds to 10 seconds at a depth of one inch (2.5 cm) on a moving belt. The oil-treated slices were dried and cooked as follows: The food pieces were dried at a process temperature of 340°F-350°F (171-177°C) for 10 minutes, and then at 230-245°F (110-118°C) for another 16 minutes in a multi zone vibrating fluidized bed dryer.

An independent laboratory analysis provided results of 7.5% fat and 2.75% moisture. The sweet potato chips were of a light crisp texture, with a bright orange appearance, and a very nice sweet flavor. A sensory panel was conducted on these finished sweet potato chips with excellent acceptability on flavor, texture, and a bright orange color as compared to fried sweet potato chips currently on the market.

**Intro into breaded foods:**

The oil emulsion method of adding oil to a variety of food pieces was also shown to provide excellent results on traditional breaded products such as breaded chicken nuggets, onion rings, fish sticks, calamari, etc. This oil emulsion method combined with baking or fluid bed drying/cooking provided products with taste, texture and appearance very similar to fried products but with greatly reduced oil content.

Example 7: Frozen chicken nugget.

The breaded food pieces, with an intrinsic fat content of 7%, are exposed to an oil-water emulsion at a concentration of 51% oil for 3 min under ambient conditions. Take-up of the emulsion into the breaded food pieces is 12% by weight. Then the pieces - having an initial moisture content of 65%, are cooked in a convection oven set at 350 degrees F (177°C) for 10 min and then at 300 degrees F (149°C) for 5 mins. The final oil content of the cooked pieces is 13 % and the final moisture content is 45%.

Example 8: Calamari (Earls).

The breaded food pieces, with an intrinsic fat content of 2%, are exposed to an oil-water emulsion at a concentration of 37% oil for 2 min under ambient conditions. Take-up of the emulsion into the breaded food pieces is 12% by weight. Then the pieces - having an initial moisture content of 40%, are cooked in a convection oven set at 350 degrees F (177°C) for 10 min and then at 300 degrees F (149°C) for 5 mins. The final oil content of the cooked pieces is 10% and the final moisture content is 30%.

Example 9: Chili chicken cubes (Earls).

The breaded food pieces, with an intrinsic fat content of 5%, are exposed to an oil-water emulsion at a concentration of 82% oil for 90 seconds under ambient conditions. Take-up of the emulsion into the breaded food pieces is 10% by weight. Then the pieces - having an initial moisture content of 65%, are cooked in a convection oven set at 350 degrees F (177°C) for 13 min and then at 300 degrees F (149°C) for 7 mins. The final oil content of the cooked pieces is 13 wt-% and the final moisture content is 50%.

Example 10: Chicken tenders/fingers (Earls).

The breaded food pieces, with an intrinsic fat content of 6%, are exposed to an oil-water emulsion at a concentration of 47% oil for 10 min under ambient conditions. Take-up of the emulsion into the breaded food pieces is 17% by weight. Then the pieces - having an initial moisture content of 58%, are cooked in a convection oven set at 350 degrees F (177°C) for 12 min and then at 300 degrees F (149°C) for 6 mins. The final oil content of the cooked pieces is 15 wt-% and the final moisture content is 43%.

**Claims**

1. A process for the application of oil to food pieces, comprising:

   (a) providing a plurality of cut or shaped food pieces;
   (b) applying an oil-water emulsion to the food pieces to provide an amount of oil to the food pieces, the oil content and the application time of the oil-water emulsion being selected to provide a predetermined final wt% oil to the food pieces, and so that the food pieces have an initial moisture level after applying the oil-water emulsion; and
   (c) reducing the initial moisture level to a moisture level of from 0.2 to 80% by weight to provide a food product, wherein the food pieces are not cooked/fried in hot oil.

2. The process of claim 1, wherein the food pieces are any of:

   (a) fruit pieces or vegetable pieces;
   (b) yams, carrots, taro, potatoes, or sweet potatoes;
   (c) potato slices or sticks.

3. The process of claim 1 or 2, which comprises before applying the oil-water emulsion to the food pieces any of the following:

   (a) blanching the food pieces;
   (b) treating the food pieces with an effective amount of alkali metal cations and/or alkaline earth metal cations and/or of at least one starch-degrading enzyme;
   (c) treating the food pieces with an effective amount of alkali metal cations and/or alkaline earth metal cations and/or of at least one starch-degrading enzyme and blanching the food pieces to at least partially deactivate the starch-degrading enzyme;
   (d) rinsing the food pieces with water and drying the food pieces.

4. The process of claim 1, 2 or 3, wherein the oil content and the application time of the oil-water emulsion is selected to provide a predetermined final wt% oil of 1-35wt% to the food product.

5. The process of claim 4, wherein the oil content of the oil-water emulsion can be selected based on one or more of the following quantities:

   the predetermined final oil fraction of the food product,
   a predetermined percentage of moisture in the food product,
   a percentage of solids in the food pieces before applying the oil-water emulsion, and
   the percentage by weight of carry-over of the oil-water emulsion onto the food pieces after applying the oil-water emulsion.

6. The process of claim 4 or 5, wherein the oil content of the oil-water emulsion can be selected according to the equation:

$$f_{oe} = \frac{f_o}{f_{co}} \times f_s (1 + f_o + f_w)$$

where $f_{oe}$ is the fraction, by weight, of oil in the oil-water emulsion, $f_o$ is the fraction, by weight, of oil on the food product, $f_{co}$ is the fractional carry-over rate of oil from the oil-water emulsion onto the food pieces, $f_s$ is the fractional solids content, by weight, of the food pieces, and $f_w$ is the water fraction, by weight, in the food product.

7. The process of any preceding claim, wherein the oil-water emulsion applied to the food pieces comprises 5 wt-% to 85 wt-% oil.

8. The process of any preceding claim, wherein one or both of the following applies:

(a) the emulsion is prepared by mixing oil and water by at least one of homogenizing, sonolation, agitating, or running oil and water through one or a series of pumps;
(b) preparing the emulsion without an exogenous emulsifier or surfactant.

9. The process of any preceding claim, wherein applying the oil-water emulsion to the food pieces comprises any of

(a) immersing the food pieces in the oil-water emulsion;
(b) immersing the food pieces in the oil-water emulsion for 2 seconds to 15 seconds at an emulsion temperature from 20°F to 150°F (-6.7-65.6°C);
(c) immersing the food pieces in the oil-water emulsion for 5 seconds to 60 seconds at an emulsion temperature of from 60°F to 100°F (15.6-37.5°C);
(d) immersing the food pieces in the oil-water emulsion at an emulsion temperature of 60°F - 95°F (15.6-35°C);
(e) immersing the food pieces in the oil-water emulsion and blanching the food pieces.

10. The process of claim 9, wherein the food pieces are agitated while being immersed in the oil-water emulsion.

11. The process of any preceding claim, wherein any of the following apply:

(a) reducing the moisture of the food pieces comprises two-stage drying of the food pieces at a first temperature, then at a lower second temperature;
(b) reducing the initial moisture level by heating in at least one oven/drier in two stages;
(c) reducing the moisture level to 10-80 wt%;
(d) reducing the moisture level to 35-70 wt%;
(e) reducing the moisture level to 40-65 wt%;

12. The process of any preceding claim, wherein the fat content of the food product is up to 15 wt-%.

13. The process of any preceding claim, wherein the food product comprises less than 150 ppb acrylamide.

**Patentansprüche**

1. Prozess zum Auftragen von Öl auf Lebensmittelstücke, umfassend:

(a) Bereitstellen einer Vielzahl geschnittener oder geformter Lebensmittelstücke;
(b) Auftragen einer Öl-Wasser-Emulsion auf die Lebensmittelstücke, um den Lebensmittelstücken eine Ölmenge bereitzustellen, wobei der Ölgehalt und die Auftragungszeit der Öl-Wasser-Emulsion ausgewählt werden, um einen vorbestimmten abschließenden Gewichtsprozentsatz an Öl auf den Lebensmittelstücken bereitzustellen, und derart, dass die Lebensmittelstücke einen anfänglichen Feuchtigkeitspegel nach dem Auftragen der Öl-Wasser-Emulsion aufweisen; und
(c) Reduzieren des anfänglichen Feuchtigkeitspegels auf einen Feuchtigkeitspegel von 0,2 bis 80 Gew.-%, um ein Lebensmittelprodukt bereitzustellen, wobei die Lebensmittelstücke nicht in heißem Öl gegart/gebraten werden.

2. Prozess nach Anspruch 1, wobei die Lebensmittelstücke beliebige der Folgenden sind:

(a) Obststücke oder Gemüsestücke;
(b) Jamswurzeln, Karotten, Taro, Kartoffeln oder Süßkartoffeln;
(c) Kartoffelscheiben oder -stäbchen.

3. Prozess nach Anspruch 1 oder 2, der vor dem Auftragen der Öl-Wasser-Emulsion auf die Lebensmittelstücke beliebige der Folgenden umfasst:

(a) Blanchieren der Lebensmittelstücke;

(b) Behandeln der Lebensmittelstücke mit einer effektiven Menge von Alkalimetallkationen und/oder Erdalkalimetallkationen und/oder mindestens einem Stärke abbauenden Enzym;

(c) Behandeln der Lebensmittelstücke mit einer effektiven Menge von Alkalimetallkationen und/oder Erdalkalimetallkationen und/oder mindestens einem Stärke abbauenden Enzym und Blanchieren der Lebensmittelstücke, um das Stärke abbauende Enzym mindestens teilweise zu deaktivieren;

(d) Spülen der Lebensmittelstücke mit Wasser und Trocknen der Lebensmittelstücke.

4. Prozess nach Anspruch 1, 2 oder 3, wobei der Ölgehalt und die Auftragungzeit der Öl-Wasser-Emulsion dazu ausgewählt werden, einen vorbestimmten abschließenden Gewichtsprozentsatz an Öl von 1-35 Gew.-% des Lebensmittelprodukts bereitzustellen.

5. Prozess nach Anspruch 4, wobei der Ölgehalt der Öl-Wasser-Emulsion basierend auf einer oder mehreren der folgenden Mengen ausgewählt werden kann:

dem vorbestimmten abschließenden Ölanteil des Lebensmittelprodukts,

dem vorbestimmten Feuchtigkeitsprozentsatz in dem Lebensmittelprodukt,

einem Prozentsatz an Feststoffen in den Lebensmittelstücken vor dem Auftragen der Öl-Wasser-Emulsion und dem Gewichtsprozentsatz an Verschleppung der Öl-Wasser-Emulsion auf die Lebensmittelstücke nach dem Auftragen der Öl-Wasser-Emulsion.

6. Prozess nach Anspruch 4 oder 5, wobei der Ölgehalt der Öl-Wasser-Emulsion gemäß der folgenden Gleichung ausgewählt werden kann:

$$f_{oe} = \frac{f_o}{f_{co}} \times f_s (1 + f_o + f_w)$$

wobei $f_{oe}$ der Gewichtsanteil von Öl in der Öl-Wasser-Emulsion ist, $f_o$ der Gewichtsanteil von Öl auf dem Lebensmittelprodukt ist, $f_{co}$ der Anteil der Verschleppungsrate von Öl von der Öl-Wasser-Emulsion auf die Lebensmittelstücke ist, $f_s$ der Gewichtsanteil von Feststoffgehalt der Lebensmittelstücke ist, und $f_w$ der Gewichtsanteil von Wasser in dem Lebensmittelprodukt ist.

7. Prozess nach einem vorstehenden Anspruch, wobei die Öl-Wasser-Emulsion, die auf die Lebensmittelstücke aufgetragen wird, 5 Gew.-% bis 85 Gew.-% Öl umfasst.

8. Prozess nach einem vorstehenden Anspruch, wobei eines oder beide der Folgenden gelten:

(a) die Emulsion wird durch Mischen von Öl und Wasser durch mindestens eines von Homogenisieren, Sonolieren, Rühren oder Durchleiten von Öl und Wasser durch eine oder eine Reihe von Pumpen hergestellt;

(b) Herstellen der Emulsion ohne exogenen Emulgator oder Tensid.

9. Prozess nach einem vorstehenden Anspruch, wobei das Auftragen der Öl-Wasser-Emulsion auf die Lebensmittelstücke ein beliebiges der Folgenden umfasst

(a) Eintauchen der Lebensmittelstücke in die Öl-Wasser-Emulsion;

(b) Eintauchen der Lebensmittelstücke in die Öl-Wasser-Emulsion für 2 Sekunden bis 15 Sekunden bei einer Emulsionstemperatur von 20 °F bis 150 °F (-6,7-65,6 °C);

(c) Eintauchen der Lebensmittelstücke in die Öl-Wasser-Emulsion für 5 Sekunden bis 60 Sekunden bei einer Emulsionstemperatur von 60 °F bis 100 °F (15,6-37,5 °C);

(d) Eintauchen der Lebensmittelstücke in die Öl-Wasser-Emulsion bei einer Emulsionstemperatur von 60 °F - 95 °F (15,6-35 °C);

(e) Eintauchen der Lebensmittelstücke in die Öl-Wasser-Emulsion und Blanchieren der Lebensmittelstücke.

10. Prozess nach Anspruch 9, wobei die Lebensmittelstücke gerührt werden, während sie in der Öl-Wasser-Emulsion eingetaucht sind.

**EP 3 331 385 B1**

11. Prozess nach einem vorstehenden Anspruch, wobei beliebige der Folgenden gelten:

(a) Reduzieren der Feuchtigkeit der Lebensmittelstücke, das Zwei-Stufen-Trocknen der Lebensmittelstücke bei einer ersten Temperatur, dann bei einer niedrigeren zweiten Temperatur umfasst;
(b) Reduzieren des anfänglichen Feuchtigkeitspegels durch Erhitzen in mindestens einem Ofen/Trockner in zwei Stufen;
(c) Reduzieren des Feuchtigkeitspegels auf 10-80 Gew.-%;
(d) Reduzieren des Feuchtigkeitspegels auf 35-70 Gew.-%;
(e) Reduzieren des Feuchtigkeitspegels auf 40-65 Gew.-%;

12. Prozess nach einem vorstehenden Anspruch, wobei der Fettgehalt des Lebensmittelprodukts bis zu 15 Gew.-% beträgt.

13. Prozess nach einem vorstehenden Anspruch, wobei das Lebensmittelprodukt weniger als 150 ppb Acrylamid umfasst.

**Revendications**

1. Procédé pour l'application d'huile sur des morceaux d'aliments, comprenant :

(a) la fourniture d'une pluralité de morceaux d'aliments coupés ou façonnés ;
(b) l'application d'une émulsion huile-eau sur les morceaux d'aliments pour donner une quantité d'huile aux morceaux d'aliments, la teneur en huile et le temps d'application de l'émulsion huile-eau étant choisis pour donner un % en poids final prédéterminé d'huile aux morceaux d'aliments, et pour que les morceaux d'aliments aient un niveau d'humidité initial après l'application de l'émulsion huile-eau ; et
(c) la réduction du taux d'humidité initial à un taux d'humidité allant de 0,2 à 80 % en poids pour obtenir un produit alimentaire, dans lequel les morceaux d'aliments ne sont pas cuits/frits dans de l'huile chaude.

2. Procédé selon la revendication 1, dans lequel les morceaux d'aliments sont l'un quelconque parmi :

(a) des morceaux de fruits ou des morceaux de légumes ;
(b) des ignames, des carottes, du taro, des pommes de terre, ou des patates douces ;
(c) des pommes de terre en tranches ou en bâtonnets.

3. Procédé selon la revendication 1 ou 2, qui comprend, avant l'application de l'émulsion huile-eau sur les morceaux d'aliments, l'un quelconque de ce qui suit :

(a) le blanchiment des morceaux d'aliments ;
(b) le traitement des morceaux d'aliments avec une quantité efficace de cations métalliques alcalins et/ou de cations métalliques alcalino-terreux et/ou d'au moins une enzyme dégradant l'amidon ;
(c) le traitement des morceaux d'aliments avec une quantité efficace de cations métalliques alcalins et/ou de cations métalliques alcalino-terreux et/ou d'au moins une enzyme dégradant l'amidon et le blanchiment des morceaux d'aliments afin de désactiver au moins partiellement l'enzyme dégradant l'amidon ;
(d) le rinçage des morceaux d'aliments avec de l'eau et le séchage des morceaux d'aliments.

4. Procédé selon la revendication 1, 2 ou 3, dans lequel la teneur en huile et le temps d'application de l'émulsion huile-eau sont choisis pour donner un % en poids d'huile final prédéterminé de 1 à 35 % au produit alimentaire.

5. Procédé selon la revendication 4, dans lequel la teneur en huile de l'émulsion huile-eau peut être choisie sur la base d'une ou plusieurs des quantités suivantes :

la fraction d'huile finale prédéterminée du produit alimentaire,
un pourcentage prédéterminé d'humidité dans le produit alimentaire,
un pourcentage de matières solides dans les morceaux d'aliments avant l'application de l'émulsion huile-eau, et
le pourcentage en poids de transfert de l'émulsion huile-eau sur les morceaux d'aliments après l'application de l'émulsion huile-eau.

**6.** Procédé selon la revendication 4 ou 5, dans lequel la teneur en huile de l'émulsion huile-eau peut être choisie selon l'équation :

$$f_{oe} = \frac{f_o}{f_{co}} \times f_s (1 + f_o + f_w)$$

où $f_{oe}$ est la fraction, en poids, d'huile dans l'émulsion huile-eau, $f_o$ est la fraction, en poids, d'huile sur le produit alimentaire, $f_{co}$ est le taux de transfert fractionnel de l'huile de l'émulsion huile-eau sur les morceaux d'aliments, $f_s$ est la teneur fractionnelle en matières solides, en poids, des morceaux d'aliments, et $f_w$ est la fraction d'eau, en poids, dans le produit alimentaire.

**7.** Procédé selon l'une quelconque revendication précédente, dans lequel l'émulsion huile-eau appliquée sur les morceaux d'aliments comprend de 5 % en poids à 85 % en poids d'huile.

**8.** Procédé selon l'une quelconque revendication précédente, dans lequel l'un ou les deux de ce qui suit s'appliquent :

(a) l'émulsion est préparée en mélangeant l'huile et l'eau par au moins l'un parmi une homogénéisation, une sonolation, une agitation, ou le passage de l'huile et de l'eau dans une ou une série de pompes ;
(b) la préparation de l'émulsion sans émulsifiant ou agent tensioactif exogène.

**9.** Procédé selon l'une quelconque revendication précédente, dans lequel l'application de l'émulsion huile-eau sur les morceaux d'aliments comprend l'une quelconque parmi

(a) l'immersion des morceaux d'aliments dans l'émulsion huile-eau ;
(b) l'immersion des morceaux d'aliments dans l'émulsion huile-eau pendant 2 secondes à 15 secondes à une température d'émulsion allant de 20 °F à 150 °F (-6,7 à 65,6 °C) ;
(c) l'immersion des morceaux d'aliments dans l'émulsion huile-eau pendant 5 secondes à 60 secondes à une température d'émulsion allant de 60 °F à 100 °F (15,6 à 37,5 °C) ;
(d) l'immersion des morceaux d'aliments dans l'émulsion huile-eau à une température d'émulsion allant de 60 °F à 95 °F (15,6 à 35 °C) ;
(e) l'immersion des morceaux d'aliments dans l'émulsion huile-eau et le blanchiment des morceaux d'aliments.

**10.** Procédé selon la revendication 9, dans lequel les morceaux d'aliments sont agités tout en étant immergés dans l'émulsion huile-eau.

**11.** Procédé selon l'une quelconque revendication précédente, dans lequel l'un quelconque de ce qui suit s'applique :

(a) la réduction de l'humidité des morceaux d'aliments comprend le séchage en deux étapes des morceaux d'aliments à une première température, puis à une seconde température plus basse ;
(b) la réduction du taux d'humidité initial par chauffage dans au moins un four/séchoir en deux étapes ;
(c) la réduction du taux d'humidité à 10 à 80 % en poids ;
(d) la réduction du taux d'humidité à 35 à 70 % en poids ;
(e) la réduction du taux d'humidité à 40 à 65 % en poids ;

**12.** Procédé selon l'une quelconque revendication précédente, dans lequel la teneur en matières grasses du produit alimentaire va jusqu'à 15 % en poids.

**13.** Procédé selon l'une quelconque revendication précédente, dans lequel le produit alimentaire comprend moins de 150 ppb d'acrylamide.

**EP 3 331 385 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4058631 A
- US 4756916 A, Dreher
- US 5292540 A
- US 5312631 A
- US 5370898 A
- US 5441758 A, Lewis
- US 5470600 A, Petelle
- US 5603973 A, Benson
- US 5858431 A
- US 20020004085 A, Xu
- US 4511583 A, Olson
- US 3600193 A
- US 3922370 A
- US 3348950 A
- US 7056544 B